# EUROPÄISCHE PATENTANMELDUNG

(11) **EP 2 674 692 A1**
(43) Veröffentlichungstag der Anmeldung: **18.12.2013**
(21) Anmeldenummer: 12171657.5
(22) Anmeldetag: 12.06.2012
(51) Int. Cl.: F24J 2/52

(54) **Halterung für einen Solarkollektor oder ein Solarmodul**

(71) Anmelder: voestalpine Polynorm BV, 3751 LJ Bunschoten (NL)
(72) Erfinder: Leeuwerink, Tim, 1087 NA Amsterdam (NL); van Mastrigt, John, 3731 DL De Bilt (NL)
(74) Vertreter: Jell, Friedrich

(57) **Zusammenfassung**

Es wird eine Halterung (1) für einen Solarkollektor (2) oder ein Solarmodul (2) an einer Tragstruktur (3) mit wenigstens einem Verbindungselement (4), insbesondere Schraube (40), zur Befestigung der Halterung (1) an der Tragstruktur (3) und mit einem mit dem Verbindungselement (4) mechanisch verbindbaren Halteteil (5) zur Befestigung des Solarkollektors (2) oder Solarmoduls (2) an der Halterung (1) gezeigt, wobei das Halteteil (5) wenigstens zwei gegenüberliegende Schenkel (8, 9) aufweist, die zwischen sich eine Aufnahme (10) für eine kraft- und formschlüssige Verbindung (6, 7) mit dem Solarkollektor (2) oder Solarmodul (2) ausbilden. Um eine werkzeuglose Handhabung der Halterung zu ermöglichen, wird vorgeschlagen, dass die Halterung (1) ein Montageprofil (11) aufweist, das einerseits über das Verbindungselement (4) an der Tragstruktur (3) befestigbar ist und andererseits mit dem Halteteil (5) eine Steckverbindung (14) für ein werkzeugloses Zusammenfügen ausbildet.

## Beschreibung

Die Erfindung betrifft eine Halterung für einen Solarkollektor oder ein Solarmodul an einer Tragstruktur mit wenigstens einem Verbindungselement, insbesondere Schraube, zur Befestigung der Halterung an der Tragstruktur und mit einem mit dem Verbindungselement mechanisch verbindbaren Halteteil zur Befestigung des Solarkollektors oder Solarmoduls an der Halterung, wobei das Halteteil wenigstens zwei gegenüberliegende Schenkel aufweist, die zwischen sich eine Aufnahme für eine kraft- und formschlüssige Verbindung mit dem Solarkollektor oder Solarmodul ausbilden.

Zur mechanischen Befestigung von Photovoltaikmodulen bzw. Solarmodulen an einem Dach sind Halterungen bekannt (DE202008009241 U1), die mit profilförmigen Halteteilen Solarmodule aufnehmen bzw. damit festklammern. Hierfür weisen diese Halteteile elastische Schenkel auf, die eine kraft- und formschlüssige Verbindung mit dem Modul eingehen können. Den Halteteilen ist außerdem ein Befestigungsschenkel zugeordnet, um diese mit der Tragstruktur unter Verwendung von Verbindungselementen fest zu verschrauben. Zwar ermöglichen diese Halteteile ein werkzeugloses Zusammenfügen mit den Solarmodulen, da in deren elastischen Aufnahmen die Module lediglich hineingehebelt werden müssen - nach deren Einsetzen bilden diese jedoch mit den Halteteilen, die zusätzlich an der Tragstruktur befestigt sind, einen nachteilig vergleichsweise schwer trennbaren Konstruktionsverbund aus. Dies kann beispielsweise eine Wartung an der Halterung oder den Solarmodulen erheblich erschweren, insbesondere wenn ein rückseitiger Zugang zu den Modulen gefordert ist. Die aus dem Stand der Technik bekannten Halterungen sind daher vergleichsweise wartungsunfreundlich.

Die Erfindung hat sich daher die Aufgabe gestellt, eine Halterung der eingangs geschilderten Art derart auf konstruktiv einfache Weise zu verbessern, dass trotz deren Montage unter vermindertem Einsatz von Werkzeugen eine vergleichsweise hohe Wartungsfreundlichkeit besteht.

Die Erfindung löst die gestellte Aufgabe dadurch, dass die Halterung ein Montageprofil aufweist, das einerseits über das Verbindungselement an der Tragstruktur befestigbar ist und andererseits mit dem Halteteil eine Steckverbindung für ein werkzeugloses Zusammenfügen ausbildet.

Weist die Halterung ein Montageprofil auf, dann kann sich durch dieses zusätzliche Bauteil die Möglichkeit eröffnen, dass dieses Montageprofil einerseits über das Verbindungselement an der Tragstruktur befestigbar ist und andererseits mit dem Halteteil eine Steckverbindung ausbildet. Letzteres kann insbesondere dafür sorgen, dass durch dieses zusätzliche Bauteil der Einsatz von Werkzeugen nicht steigen muss, weil eine Steckverbindung ein werkzeugloses Zusammenfügen von Montageprofil und Halteteil sicherstellen kann. Besonders aber kann die erfindungsgemäße Konstruktion vom Montageprofil, das an der Tragstruktur befestigt ist und dem Vorsehen einer Schnappverbindung zwischen Montageprofil und Halteteil die Wartungsfreundlichkeit der Halterung besonders erhöht werden. Es kann nämlich damit das Halteteil vom Solarkollektor bzw. Solarmodul losgelöst werden, wodurch nicht nur der Solarkollektor bzw. das Solarmodul sondern auch das Halteteil für Wartungszwecke freigegeben werden kann. Selbst eine darunter liegende Tragstruktur kann damit auf Funktionstüchtigkeit überprüft bzw. diesbezüglich gewartet werden. Hinzu kommt, dass für Wartungszwecke nicht unbedingt ein Entfernen des Montageprofil notwendig werden muss, so dass ein Zusammensetzen der Anlage aus Halterung und Solarkollektor bzw. Solarmodul ausschließlich über eine Handhabung der Halteteile möglich werden kann. Diese Vorteile können sich auch bei der Erstmontage von Halterung und Solarkollektor bzw. Solarmodul ergeben, in dem die Montageprofile die Position des Solarkollektors bzw. Solarmoduls festlegen und die dadurch positionierten Solarkollektoren bzw. Solarmodule anschließend lediglich mit den Halteteilen an der Halterung befestigt werden müssen. Die erfindungsgemäße Halterung kann daher nicht nur mit einem verminderten Einsatz von Werkzeugen Solarkollektoren oder Solarmodulen an einer Tragstruktur befestigt werden sondern auch zu einer eheblichen Montage- und Wartungserleichterung führen.

Konstruktiv einfach kann diese Steckverbindung zwischen Halteteil und Montageprofil dadurch geschaffen werden, in dem das Halteteil eine Öffnung und das Montageprofil eine in diese Öffnung einstreckbare Zunge aufweisen. Außerdem kann solch eine ausgebildete Steckverbindung zu einer einfachen Handhabung bei Montage und Wartung führen.

Kompakte und einfache Konstruktionsverhältnisse am Halteteil können ermöglicht werden, wenn ein insbesondere gegenüber den Schenkeln geneigt verlaufender und diese Schenkel tragender Verbindungsschenkel die Öffnung aufweist. Außerdem kann eine derartige Konstruktion unter Anwendung kostengünstiger Spritzgusswerkzeuge die Herstellungskosten der Halterung erheblich vermindern. Eine äußerst wettbewerbsfähige Halterung kann dadurch geschaffen werden.

Bildet der untere Aufnahmeschenkel einen Schnapphaken aus, können auf einfache Weise Konstruktionsmerkmale des Solarkollektors bzw. Solarmoduls für eine formschlüssige Verbindung genützt werden. Außerdem kann damit der Schnapphaken gegenüber einer Manipulation oder Umwelteinflüssen geschützt werden, was eine besonders sichere und standfeste Halterung schaffen kann.

Liegen einem oberen Aufnahmeschenkel zwei untere und zueinander seitlich beabstandete Aufnahmeschenkel gegenüber, können auf einfache konstruktive Weise zwei voneinander getrennte Aufnahmen am Halteteil für den aufzunehmenden Solarkollektor bzw. das aufzunehmende Solarmodul geschaffen werden.

Diese Freistellung zwischen den unteren Aufnahmeschenkel kann genützt werden, wenn die Öffnung der Steckverbindung zwischen den beiden unteren Aufnahmeschenkeln vorgesehen wird. Ein besonders kompaktes Halteteil kann dadurch geschaffen werden, was insbesondere auch über die beidseitig zur Öffnung angrenzenden Aufnahmeschenkel eine äußerst stabile Abstützung des Solarkollektors bzw. Solarmoduls gewährleisten kann.

Diese Abstützung kann noch weiter verbessert werden, wenn die Öffnung der Steckverbindung bündig mit der der Aufnahme zugewandten Fläche des unteren Aufnahmeschenkels verläuft und damit für ein abstützendes Anliegen des Montageprofils am Solarkollektor bzw. Solarmodul genützt werden kann.

Weist der obere Aufnahmeschenkel auf seiner der Aufnahme zugewandten Oberfläche ein gegenüber einem Glasmaterial weicheres Material auf, kann beispielsweise ein Zerkratzen der Oberfläche des Solarkollektors bzw. Solarmoduls durch das Halteteil vermieden werden.

Um die Halterung gegenüber Umwelteinflüssen zu schützen, kann die Halterung zusätzlich eine Abdeckung aufweisen. Einfache Montageverhältnisse der Abdeckung können sich ergeben, wenn der obere Aufnahmeschenkel des Halteteils eine Rastnase für eine Schnappverbindung mit der Abdeckung ausbildet.

Die Abdeckung kann auch zur Abdichtung der Halterung gegenüber dem Solarkollektor oder dem Solarmodul genützt werden, in dem diese Abdeckung auf seiner dem Solarkollektor oder dem Solarmodul zugewandten Seite eine Dichtlippe trägt. Eine besonders gegenüber Umwelteinflüssen standfeste Halterung kann damit geschaffen werden.

Weist der obere Aufnahmeschenkel eine Sichtöffnung zur Aufnahme auf, kann die Montage der Halterung einfach überprüft werden. Außerdem kann diese Sichtöffnung zum Einsetzen von Werkzeugen genützt werden, um das Halteteil vom Solarkollektor bzw. Solarmodul weg zu hebeln, was die Demontage der Halterung erleichtern kann.

Kostengünstige und robuste Halteteile können sich ergeben, wenn das Halteteil einen faserverstärkten Kunststoff aufweist. Die Standfestigkeit der Halterung kann dadurch deutlich erhöht werden.

Letzteres kann weiter verbessert werden, in dem das Montageprofil aus einem Metallwerkstoff besteht.

Konstruktiv vereinfachte Voraussetzungen sowie kompakte Bauverhältnisse können geschaffen werden, wenn das Halteteil f-förmig ausgebildet ist.

Das Montageprofil kann u-förmig ausgebildet sein, um damit zwei Flansche zu erzeugen, von dem einer zur Befestigung des Montageprofils an der Tragstruktur und der andere für die Steckverbindung mit dem Halteteil genützt werden kann. Vorteilhaft können zwei auf Abstand zueinander liegende Solarkollektoren bzw. Solarmodule mit einem Montageprofil an der Tragstruktur befestigt werden, wenn Montageprofil als offenes Kastenprofil ausgebildet ist. Das Montageprofil kann so zwei Flansche für je einen Solarkollektoren bzw. Solarmodule ausbilden, wobei der Steg des Montageprofils zur Befestigung an der Tragstruktur herangezogen werden kann.

In den Figuren ist beispielsweise der Erfindungsgegenstand anhand von zwei Ausführungsbeispielen näher dargestellt. Es zeigen
Fig. 1 eine aufgerissene Seitenansicht eines teilweise dargestellten Solarkollektors mit der Halterung nach einem ersten Ausführungsbeispiel und
Fig. 2 eine vergrößerte Darstellung der Fig.1 in einer anderen aufgerissenen Ansicht,
Fig. 3 eine teilweise dargestellte Draufsicht der nach Fig. 1 dargestellten Halterung mit weggelassener Abdeckung und
Fig. 4 eine aufgerissene Seitenansicht eines teilweise dargestellten Solarkollektors mit der Halterung nach einem zweiten Ausführungsbeispiel.

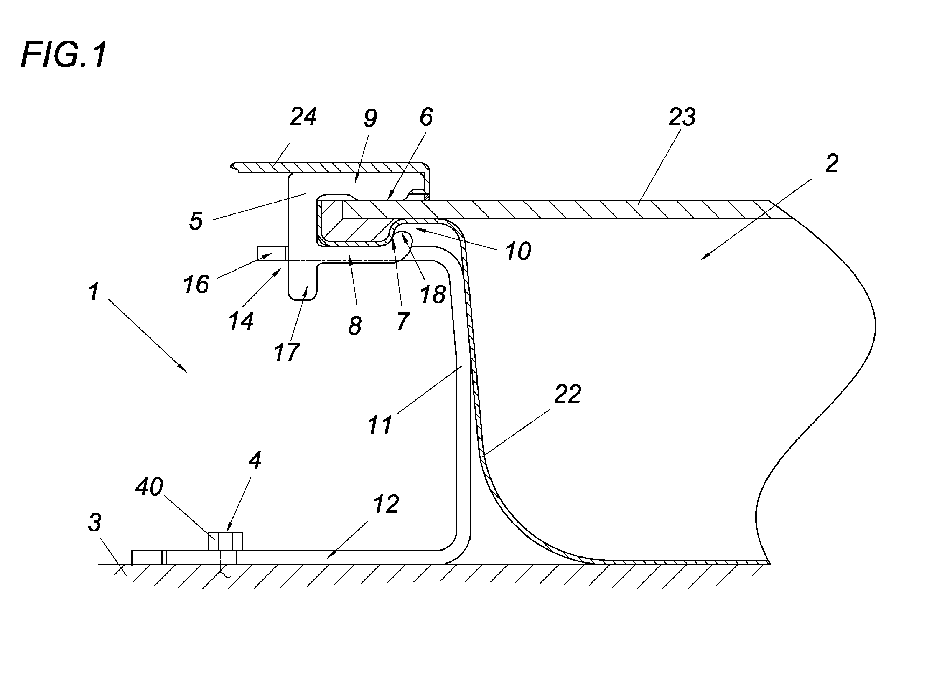

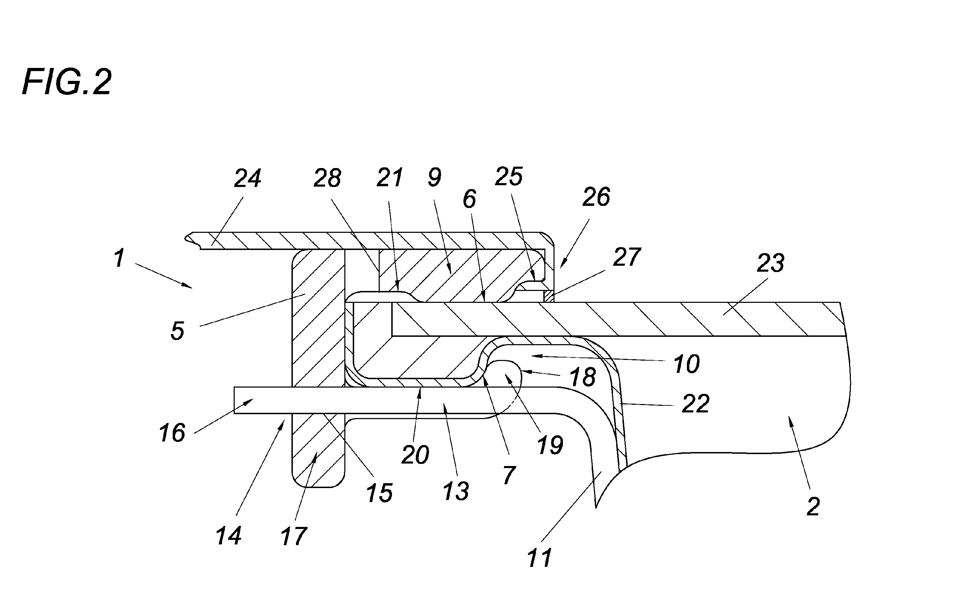

Die nach den Figuren 1 und 2 in einer Seitenansicht beispielsweise dargestellte Halterung 1 als erstes Ausführungsbeispiel der Erfindung dient dazu, einen Solarkollektor 2 an einer Tragstruktur 3, beispielsweise einem Dach, sicher zu befestigen. Zu diesem Zweck sind der Halterung 1 ein als Schraube 40 ausgeführtes Verbindungselement 4 und ein Halteteil 5 zugeordnet. Das Verbindungselement 4 wird zur Montage der Halterung 1 an der Tragstruktur 3 und das Halteteil 5 zur Befestigung des Kollektors 2 an der Halterung 1 herangezogen. Der Kollektor 2 ist mit dem Halteteil 5 über eine kraft- und formschlüssige Verbindung 6 und 7 fest mechanisch verbunden. Zu diesem Zweck weist das Halteteil 5 gegenüberliegende Schenkel 8, 9 auf, die eine Aufnahme 10 für den Kollektor 2 ausbilden. Halteteil 5 und Kollektor 2 können damit ohne Werkzeug zusammengefügt werden, wodurch einfache Montagebedingungen entstehen. Ohne diese Montagebedingungen zu verändern, jedoch bei der Wartung der Halterung 1 und/oder des Kollektors 2 erhöhte Flexibilität zu ermöglichen, weist die Halterung 1 ein zusätzliches Bauteil, nämlich ein Montageprofil 11, auf. Dieses u-förmige Montageprofil 11 ist auf der einen Seite mit seinem Flansch 12 an der Tragstruktur 3 über die Schraube 40 befestigt. Auf der anderen Seite wird sein Flansch 13 verwendet, mit dem Halteteil 5 eine Steckverbindung 14 auszubilden, um damit Halteteil 5 und Montageprofil 11 werkzeuglos zusammenfügen zu können.

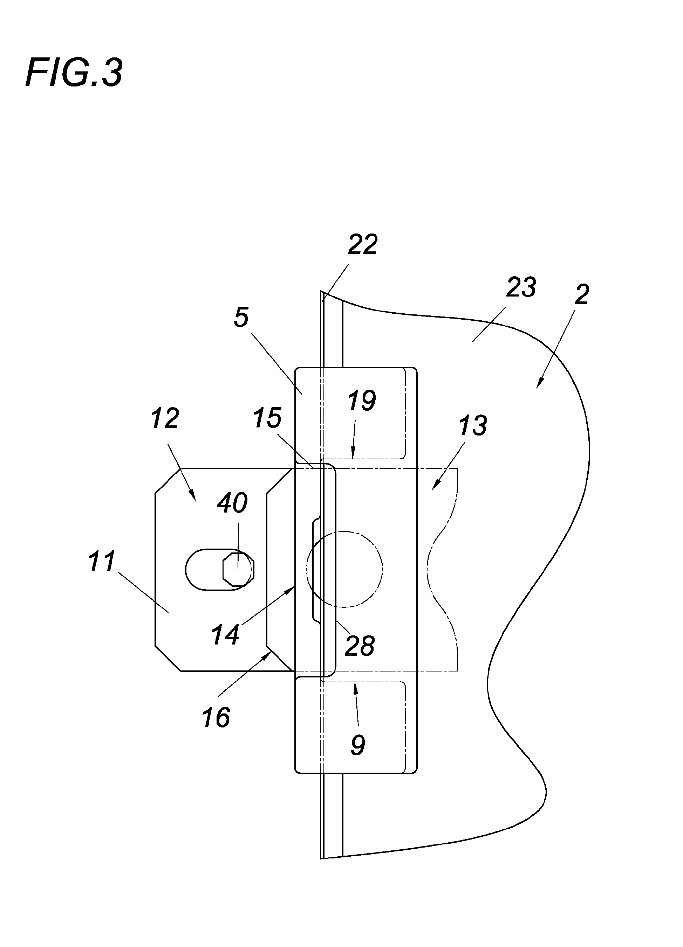

Zu diesem Zweck ist im Halteteil 5 eine Öffnung 15 vorgesehen, in die die vom Flansch 13 ausgeformte Zunge 16 des Montageprofil 11 eingesteckt werden kann, was in der Fig. 3 besser erkannt werden kann. Da das Halteteil 5 mit dem Kollektor 2 in seiner Position durch die Aufnahme 10 verriegelt, ist die Steckverbindung 14 nicht besonders konstruktiv ausgestaltet. Die Zunge 16 der Steckverbindung 14 ist lediglich lang genug, um ein Abziehen des Halteteils 5 zu vermeiden. Außerdem kann eine derart lose Steckverbindung 14 besonders auf thermische Veränderungen in den Abmessungen reagieren bzw. diese diesbezüglich über einen Verschiebungsweg des Halteteils 5 entlang der Zunge 16 ausgleichen.

Diese Öffnung 15 ist im Verbindungsschenkel 17 des Halteteils 5 vorgesehen, welcher Verbindungschenkel 17 gegenüber den Schenkeln 8, 9 geneigt verlauft und diese Schenkel 8, 9 trägt. Das Halteteil 5 nimmt so eine f-förmige Ausgestaltung ein, was äußerst kompakte Konstruktionsverhältnisse schafft

Dadurch, dass der untere Aufnahmeschenkel 8 einen Schnapphaken 18 ausbildet, wird eine werkzeugfrei erstellbare formschlüssige Verbindung 7 mit dem Solarkollektor 2 geschaffen.

Diese formschlüssige Verbindung 7 ist außerdem vergleichsweise hoch mechanisch belastbar, weil dem oberen Aufnahmeschenkel 9 zwei untere Aufnahmeschenkel 8 und 19 gegenüberliegen, die voneinander seitlich beabstandet am Verbindungsschenkel 17 vorgesehen sind.

Da sich die Öffnung 15 der Steckverbindung 14 zwischen den beiden unteren Aufnahmeschenkeln 8, 19 befindet, werden mechanische Belastungsspitzen zwischen Halteteil 5 auf das Montageprofil 11 vermieden. Das Halteteil 5 wird mechanisch entlastet, in dem die Öffnung 15 der Steckverbindung 14 bündig mit der der Aufnahme 10 zugewandten Fläche 20 der unteren Aufnahmeschenkel 8 und 19 verläuft. Der obere Flansch 13 des Montageprofils 11 kann nämlich direkt vom Kollektor 2 mechanische Belastungen aufnehmen und damit selbstständig tragen.

Der obere Aufnahmeschenkel 9 besteht auf seiner der Aufnahme 10 zugewandten Oberfläche 21 aus einem gegenüber einem Glasmaterial weicheren Material. Dadurch ist ein Zerkratzen der in der Blechwanne 22 befestigten Glasscheibe 23 des Kollektors 2 vermeidbar.

Um die Halterung 1 gegenüber Umwelteinflüssen zu schützen, ist der Halterung 1 eine Abdeckung 24 zugeordnet. Diese Abdeckung 24 wird über eine Rastnase 25 des oberen Aufnahmeschenkels 9 des Halteteils 5 eingehängt bzw. über diese Rastnase 25 gedrückt, um auch hier eine werkzeuglose Schnappverbindung 26 zu ermöglichen. Die Abdeckung 24 trägt auf ihrer dem Solarkollektor 2 zugewandten Seite eine Dichtlippe 27 um einen flüssigkeitsdichten Anschluss zu schaffen.

Eine Demontage der Halterung 1 wird durch eine Sichtöffnung 28 zur Aufnahme 10 erleichtert, die in den oberen Aufnahmeschenkel 9 eingebracht ist. Über diese Sichtöffnung 28 ist nämlich ein nicht näher dargestellter Hebel zum Trennen der kraft und formschlüssigen Verbindung 6, 7 zwischen Halteteil 5 und Kollektor 2 einsetzbar.

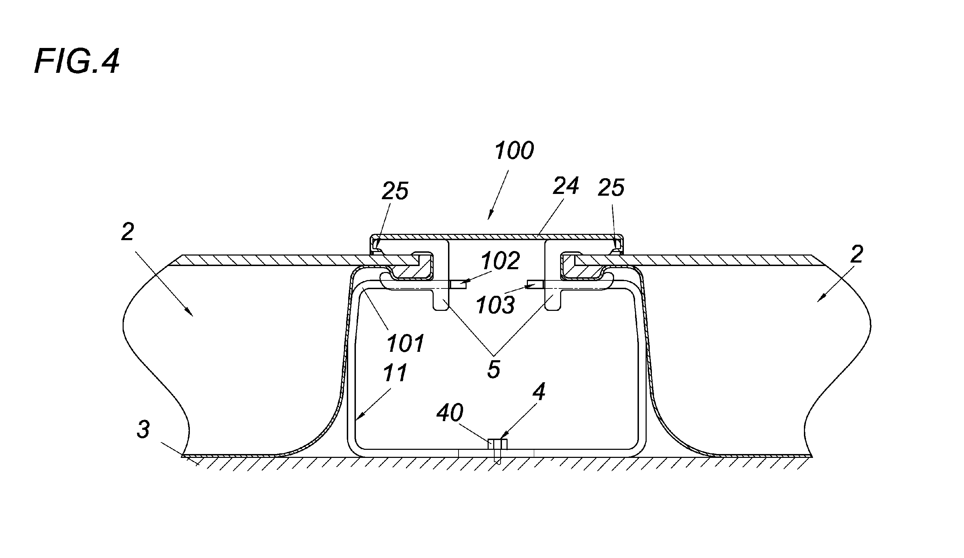

Nach Fig. 4 wird ein weiteres Ausführungsbeispiel zu einer Halterung 100 dargestellt, die zum Unterschied zur Halterung 1 der Figuren 1, 2 und 3 ein anders geformtes Montageprofil 11 aufweist. Dieses Montageprofil 11 ist nämlich als offenes Kastenprofil 101 (im Sinne einer doppelten u-Form) ausgebildet und kann daher zwei obere Flansche 102 und 103 zum Tragen von Halteteilen 5 zweier Solarkollektoren 2 bieten. Damit ist nicht nur der Abstand zwischen den Solarkollektoren 2 über die Breite des Kastenprofils 101 fix vorgegeben, sondern ist kann damit auch eine schnell und einfach handhabbare Halterung 100 geschaffen. Vorteilhaft greift die Abdeckung 24 in die Rastnasen 25 der gegenüberliegenden Halteteile 5 ein, um sich damit beidseitig abstützen zu können.

## Patentansprüche

1. Halterung für einen Solarkollektor (2) oder ein Solarmodul (2) an einer Tragstruktur (3) mit wenigstens einem Verbindungselement (4), insbesondere Schraube (40), zur Befestigung der Halterung (1) an der Tragstruktur (3) und mit einem mit dem Verbindungselement (4) mechanisch verbindbaren Halteteil (5) zur Befestigung des Solarkollektors (2) oder Solarmoduls (2) an der Halterung (1), wobei das Halteteil (5) wenigstens zwei gegenüberliegende Schenkel (8, 9) aufweist, die zwischen sich eine Aufnahme (10) für eine kraft- und formschlüssige Verbindung (6, 7) mit dem Solarkollektor (2) oder Solarmodul (2) ausbilden, **dadurch gekennzeichnet, dass** die Halterung (1) ein Montageprofil (11) aufweist, das einerseits über das Verbindungselement (4) an der Tragstruktur (3) befestigbar ist und andererseits mit dem Halteteil (5) eine Steckverbindung (14) für ein werkzeugloses Zusammenfügen ausbildet.

2. Halterung nach Anspruch 1, **dadurch gekennzeichnet, dass** zur Ausbildung der Steckverbindung (14) das Halteteil (5) eine Öffnung (15) und das Montageprofil (11) eine in diese Öffnung (15) einsteckbare Zunge (16) aufweisen.

3. Halterung nach Anspruch 2, **dadurch gekennzeichnet, dass** ein insbesondere gegenüber den Schenkeln (8, 9) geneigt verlaufender und diese Schenkel (8, 9) tragender Verbindungsschenkel (17) die Öffnung (15) aufweist.

4. Halterung nach Anspruch 1, 2 oder 3, **dadurch gekennzeichnet, dass** der untere Aufnahmeschenkel (8) einen Schnapphaken (18) für eine formschlüssige Verbindung (7) mit dem Solarkollektor (2) oder dem Solarmodul (2) ausbildet.

5. Halterung nach einem der Ansprüche 1 bis 4, **dadurch gekennzeichnet, dass** einem oberen Aufnahmeschenkel (9) zwei untere und zueinander seitlich beabstandete Aufnahmeschenkel (8, 19) gegenüberliegen.

6. Halterung nach Anspruch 5, **dadurch gekennzeichnet, dass** die Öffnung (15) der Steckverbindung (14) zwischen den beiden unteren Aufnahmeschenkeln (8, 9) vorgesehen ist.

7. Halterung nach einem der Ansprüche 1 bis 6, **dadurch gekennzeichnet, dass** die Öffnung (15) der Steckverbindung (14) bündig mit der der Aufnahme (10) zugewandten Fläche (20) des unteren Aufnahmeschenkels (8, 9) verläuft.

8. Halterung nach einem der Ansprüche 1 bis 7, **dadurch gekennzeichnet, dass** der obere Aufnahmeschenkel (9) auf seiner der Aufnahme (10) zugewandten Oberfläche (21) ein gegenüber einem Glasmaterial (23) des Solarkollektors (2) oder Solarmoduls (2) weicheres Material aufweist.

9. Halterung nach einem der Ansprüche 1 bis 8, **dadurch gekennzeichnet, dass** die Halterung (1) eine Abdeckung (24) aufweist, und dass der obere Aufnahmeschenkel (9) eine Rastnase (25) für eine Schnappverbindung (26) mit der Abdeckung (24) ausbildet.

10. Halterung nach Anspruch 9, **dadurch gekennzeichnet, dass** Abdeckung (24) auf seiner dem Solarkollektor (2) oder dem Solarmodul (2) zugewandten Seite eine Dichtlippe (27) trägt.

11. Halterung nach einem der Ansprüche 1 bis 10, **dadurch gekennzeichnet, dass** der obere Aufnahmeschenkel (9) eine Sichtöffnung (28) zur Aufnahme (10) aufweist.

12. Halterung nach einem der Ansprüche 1 bis 11, **dadurch gekennzeichnet, dass** das Halteteil (5) einen faserverstärkten Kunststoff aufweist.

13. Halterung nach einem der Ansprüche 1 bis 12, **dadurch gekennzeichnet, dass** das Montageprofil (11) aus einem Metallwerkstoff besteht.

14. Halterung nach einem der Ansprüche 1 bis 13, **dadurch gekennzeichnet, dass** und das Halteteil (5) f-förmig ausgebildet ist.

15. Halterung nach einem der Ansprüche 1 bis 14, **dadurch gekennzeichnet, dass** das Montageprofil (11) u-förmig oder als offenes Kastenprofil (100) ausgebildet ist.
